# EUROPEAN PATENT APPLICATION

(11) **EP 1 480 142 A1**
(43) Date of publication of application: **24.11.2004**
(21) Application number: 03404002.2
(22) Date of filing: 21.05.2003
(51) Int. Cl.: G06F 17/60

(54) **Recycling system for second-hand clothing and credit card establishing the system**

(71) Applicant: Demir, Fikret Serif, 81260 Umraniye, Istanbul (TR)
(72) Inventor: Demir, Fikret Serif, 81260 Umraniye, Istanbul (TR)
(74) Representative: Ercan, Adnan

(57) **Abstract**

The present invention relates to a system that is based on the determination of second-hand prices of the clothes, which their owners do not want to use for a certain period of time, after the system-member units that acquire the said clothes from said owners carry out the maintenance, repair, dry-cleaning, ironing and storage operations, and the loading of the information about all properties and price of said clothes to the credit card of the customer. The customer, who wants to purchase a new product from the sales store that is included in the system, is able to view the list and prices of the clothes in his wardrobe and is able to deduct the revenues that he has obtained by giving sales instructions for his clothes that he does not want to use any more from the total price of his shopping.

## Description

The present invention relates to a system that has been developed to most appropriately recycle the second-hand clothing and the credit card that establishes said system.

Clothing companies are continuously producing and issuing clothing with greatly varying models and properties and are trying to increase the demand for their products using several methods. Due to the fact that whether the fashion concept or personal tastes change in accordance with the time and season, seemingly more than necessary clothing stocks are usually accumulated in wardrobes of people. Especially in societies with high income rate, despite the fact that most people face problems about the maintenance, repair and storage of their present clothes, they feel the urge to purchase the clothing they like and mostly they do not use the clothes that they have bought more than a couple of times. In times, people dispose of the clothing they do not desire to use any more; consequently this situation leads to a great waste. Besides, people can not purchase every cloth they desire as a result of their financial status. This fact makes people unsatisfied and gives rise to the emergence of products with fake trademarks that are cheaper compared to the originals, and this situation cause unjust competition.

Although the sale of second-hand clothing or barter of goods is being currently carried out world-wide, many people do not approve these actions or do not make these kind of attempts as a result of the fact that these actions can not be carried out effortlessly or reliably for especially personal goods.

The system provided by the invention has been constituted with the object to help people about the maintenance, repair and storage of their clothing; to regain the clothing that people do not want to use to the economy; to make people gain certain revenues from their second-hand clothing; to bring in an additional marketing system to textile industry by said means; to incline people to second-hand products instead of fake products; and to simplify the said procedure by carrying out said actions by means of a credit card.

According to the system that is the subject of the invention, there exists a system administrator firm that operates the system and three types of members that are included in the system. Said members have been classified to three types only for the ease of narration and have been named this way:
1^{st} Type Members: Establishments that have the physical facilities and technical equipment for the intake of clothes from customers, and for the cleaning, maintenance, repair, storage and, when need arises, second - hand sale of said clothes; or the branches which the system administrator shall establish in the region of its choice.
2^{nd} Type Members: The manufacturing companies in garment industry and clothing stores.
3^{rd} Type Members: The individual customers who are included in and benefit from the system.

According to the system relating to the invention, firstly, 1^{st} Type Members shall be established in the regions of system administrator's choice, that is, branches that have the physical facilities and technical equipment for the intake of clothes from customers, and for the cleaning, maintenance, repair, storage and, when need arises, second-hand sale of said clothes shall be established or the establishments that have these facilities shall be included in the system. Afterwards, the system administrator firm shall distribute a personal credit card to the persons who shall become 3^{rd} Type Members. At first stage, when a 3^{rd} Type Member that is in customer position calls 1^{st} Type Member about the intake and storage of his clothing that he does not intend to use anymore or that is not appropriate for utilisation, the 1^{st} Type Member shall go to 3^{rd} Type Membrane acquire and store the said clothing. At this stage, there exists three type of storage system:
1- the storage of clothing after maintenance, repair, dry-cleaning and ironing operations
2- the storage of clothing after dry-cleaning operation
3- the storage of clothing in appropriate condition without any operation

The 3^{rd} Type Member who is in customer position-makes the decision on the type of storage.

After the completion of storage operations of the clothing according to the decision of the 3^{rd} Type Member, the 1^{st} Type Member shall determine a price for the said second-hand clothing by the help of trained experts and further shall load the information about the price and all properties of clothes to the credit card of the 3^{rd} Type Member.

The 3^{rd} Type Member shall be able to view the properties and price of the clothes, which still belong to him and rest in the storage of 1^{st} Type Member, by means of his credit card whenever he makes shopping in a clothing store that is a 2^{nd} Type Member. It is possible to carry out said operation by means of Internet network or POS machines that are used currently for conventional credit cards. The 3^{rd} Type Member that makes shopping in the 2^{nd} Type Member store is able to give sales instruction for the clothes of his choice that are in his clothes list. Then the 3^{rd} Type Member is able to get the amount that he has obtained from said sale deducted from the price of his shopping. In this situation, the 3^{rd} Type Member has both got rid of his unwanted clothes and also has converted these clothing to currency. The 3^{rd} Type Member may, at his will, want the clothes for which he has not given sales instruction back from 1^{st} Type Member and resume utilising them.

The clothing for which the 3^{rd} Type Member has given sales instruction are marketed by the 1^{st} Type Member in appropriate stores. At this stage, the 2^{nd} Type Member may, if he desires, implement second-hand clothes sales department in his store, or the system administrator may establish stores that sell only second-hand clothes.

By the implementation of the system subject to the invention, the people in 3^{rd} Type Member position shall solve the problem of preserving their clothes in appropriate condition, shall effortlessly convert the clothes that they do not want to use any more to currency, shall make their decisions on their purchases knowing the approximate second-hand selling price of the clothes which they intend to purchase.

The 2^{nd} Type Members in manufacturer position shall ensure that customers prefer their products by placing special labels, which indicate that the said members and thus their products are included in the system subject to the invention, on the clothes they manufacture. Also, by tracking the second-hand sales volume of their products, they can plan their production accordingly. Besides, the customers shall be dissuaded about the purchase of products with fake trademarks and be inclined to purchase second-hand products with original trademarks. Hence, the sales volume of the member manufacturing firms shall be increased.

The 1^{st} Type Members shall earn revenues from second-hand clothing sales besides the revenues from the maintenance, repair, dry-cleaning and storage operations of said clothes and potential customers that are in 3^{rd} Type Member position shall prefer the said members as a result of the fact that said members are included in the said system.

## Claims

1. The Recycling System for Second-hand Clothing wherein the property of said system is; the fact that it is based on the processing of the clothes, which their owners, who are named 3^{rd} Type Members, do not want to use for a certain period of time, through the maintenance, repair, dry-cleaning, ironing operations after the system-member units, who are named 1^{st} Type Members, acquire the said clothes from said owners; the storage of said clothes in appropriate conditions; and after the determination of the prices of said clothes, the loading of the information about all properties and price of said clothes to the credit card of the customer.

2. The Recycling System for Second-hand Clothing as claimed in Claim 1, wherein the property of said system is; the fact that when the customer, who is named 3^{rd} Type Member, makes shopping in any clothing store that is named 2^{nd} Type Member, is able to view all properties including the price of the clothes that are in his portfolio as a list; and the fact that he can get the total revenues that he has obtained by giving sales instruction for the clothes of his choice deducted from the price of his new purchases.

3. The Credit Card Establishing the Recycling System for Second-hand Clothing as claimed in Claim 1 and Claim 2, wherein the property of said credit card is; it demonstrates the properties such as second-hand price, variety, model, colour, etc. of the clothes, which belong to the credit card owner and rest in the storage of the units that are named 1^{st} Type Member, by means of Internet network or the pos machines that conventional credit cards use; and it transmits the sales instruction, which the card user has given for the clothes of his choice, to the main information centre.

4. The Recycling System for Second-hand Clothing as claimed in Claim 1, wherein the property of said system is; the unit that is named 1^{st} Type Member stores the clothes, which said unit has acquired from the customer that is named 3^{rd} Type Member, arbitrarily in total three ways that are namely; the storage after the maintenance, repair, dry-cleaning and ironing processes, the storage after dry-cleaning process and the storage in appropriate conditions without any process.

5. The Recycling System for Second - Hand Clothing and The Credit Card Establishing Said System as claimed in Claim 1, Claim 2, Claim 3 and Claim 4, wherein the property of the said system and credit card is; it is possible to implement and utilise the same system and the credit card with same properties in sectors such as household commodities, electronic utilities, jewellery, accessories, furniture etc. besides clothing.
